**Europäisches Patentamt**

**European Patent Office**

**Office européen des brevets**

(19)

(11) Veröffentlichungsnummer : **0 111 960**
**B1**

# (12) EUROPÄISCHE PATENTSCHRIFT

(45) Veröffentlichungstag der Patentschrift :
**30.07.86**

(21) Anmeldenummer : **83201726.3**

(22) Anmeldetag : **06.12.83**

(51) Int. Cl.⁴ : **A 22 C 11/00**

(54) **Vorrichtung zum Aufbringen einer Schlauchlänge auf das Füllrohr eines Mehrfachtüllenkopfes.**

(30) Priorität : **16.12.82 DE 3246639**

(43) Veröffentlichungstag der Anmeldung :
**27.06.84 Patentblatt 84/26**

(45) Bekanntmachung des Hinweises auf die Patenterteilung : **30.07.86 Patentblatt 86/31**

(84) Benannte Vertragsstaaten :
**AT BE CH DE FR GB IT LI NL SE**

(56) Entgegenhaltungen :
**EP-A- 0 016 500**
**EP-A- 0 025 923**
**DE-A- 2 411 020**
**DE-A- 3 106 074**
**FR-A- 2 390 336**
**US-A- 3 209 398**

(73) Patentinhaber : **Niedecker, Herbert, Dipl.-Ing.**
**Am Ellerhang 6**
**D-6240 Königstein 2 (DE)**

(72) Erfinder : **Niedecker, Herbert, Dipl.-Ing.**
**Am Ellerhang 6**
**D-6240 Königstein 2 (DE)**

(74) Vertreter : **Fischer, Ernst, Dr.**
**Neumannstrasse 88**
**D-6000 Frankfurt am Main 50 (DE)**

EP 0 111 960 B1

**Beschreibung**

Die Erfindung betrifft eine Vorrichtung zum Aufbringen einer Schlauchlänge auf das Füllrohr eines Mehrfachtüllenkopfes zur Herstellung eines an einem Ende verschlossenen Darmabschnittes zu dessen weiterer Verarbeitung auf einer kombinierten Füll- und Verschließmaschine.

Es sind Vorrichtungen der vorgenannten Art bekannt (DE-A-29 41 872), bei denen eine Schlauchvorschubeinrichtung mit einem schwimmenden Raffrohr, dessen Ende konisch ausgebildet ist, mit dem ebenfalls konisch ausgebildeten Füllrohrende zentrierend zusammengeführt wird. Danach transportiert die Vorschubeinrichtung von einer Schlauchrolle den Schlauch über das Raffrohr, um ihn auf dem Füllrohr zu einer Raupe zu raffen. Nach Abschluß des Raffvorganges halten Klemmbacken das Ende der Raupe auf dem Raffrohr fest, das anschließend vom Füllrohrende weggefahren wird, worauf ein Verschluß zwischen Füllrohrende und Raffrohr um die Raupe gesetzt und diese anschließend durch eine Schneideeinrichtung vom Schlauch getrennt wird. Diese Vorrichtung hat den Nachteil, daß beim Setzen der Verschlußklammer der zu verschließende Schlauchteil nicht straff gespannt ist, wodurch der Schlauch von der Verschlußklammer nicht mit ausreichender Sicherheit genau genug mittig zu einem Zopf zusammengefaßt wird. Außerdem ist nicht sichergestellt, daß das auf dem Raffrohr befindliche Schlauchende zum Aufbringen auf das nächste Füllrohr mit ausreichender Sicherheit kontrolliert geöffnet ist, damit nicht beim Zusammenführen des Raffrohres mit dem Füllrohrende das Schlauchende eingeklemmt wird.

Es ist außerdem bekannt (DE-A-31 06 074), zum Aufbringen von füllfertigen Darmabschnitten auf das Füllrohr eine Trägerhülse vorzusehen, mit der der vorgesehene Darmabschnitt auf das Füllrohr geschoben, das Schlauchende dort festgehalten und dann die Trägerhülse zurückgezogen wird, um das Verschliessen und Aufschneiden des vor dem Füllrohr liegenden Endes des Darmabschnittes zu ermöglichen. Dabei ist vorgesehen, daß die Trägerhülse mit dem Darmabschnitt über die ganze Länge des Darmabschnittes auf das Füllrohr fährt, wobei Klemmorgane und Hub der Vorschubeinrichtung entsprechend eingestellt werden müssen. Dafür sind verhältnismäßig große Hubbewegungen der Trägerhülse erforderlich.

Aufgabe der Erfindung ist es, eine Vorrichtung der eingangs beschriebenen Art zu schaffen, bei der verhältnismäßig kurze Wege zwischen Schlauchvorschubeinrichtung und Füllrohr vorgesehen sind, und bei der außerdem die zu verschließende Schlauchlänge während des Verschließvorganges straff gespannt ist. Diese Aufgabe wird erfindungsgemäß dadurch gelöst, daß bei einer solchen Vorrichtung, die außerdem aus einem Trägerelement mit rohrförmig ausgebildetem Ende besteht, das von Vorschubrollen einer Schlauchvorschubeinheit für den Transport des von einer Schlauchrolle abgezogenen Schlauches gehalten ist und das zum Aufbringen der Schlauchlänge axial mit dem Füllrohrende zusammenführbar ist, wobei es dieses Füllrohrende im zusammengeführten Zustand zumindest teilweise übergreifend aufnimmt und wobei Klemmorgane zum Festhalten der Schlauchlänge auf dem Trägerelement bzw. auf dem Füllrohr vorgesehen sind, erfindungsgemäß das rohrförmige Ende des Trägerelementes eine oder mehrere Ausklinkungen aufweist, durch die hindurch der Schlauch mittels ein oder mehrerer anschwenkbarer Klemmorgane auf dem mit dem Trägerelement axial zusammengeführten Füllrohrende festlegbar ist, daß in diesem angeschwenkten Zustand der Klemmorgane im Bereich des rohrförmigen Endes des Trägerelements angeordnete Vorschubrollen festgestellt sind, um so als Klemmorgane den Schlauch auf dem rohrförmigen Ende des Trägerelementes tu halten, wobei die Mittelachsen dieser Vorschubrollen ungefähr in einer Ebene mit den Klemmstellen der Klemmorgane auf dem Füllrohrende angeordnet sind. Die Mittelachsen und Klemmstellen können dabei etwa 20 mm voneinander abweichen. Bei zwei Ausklinkungen am rohrförmigen Ende des Trägerelementes entstehen zwei gegenüberliegende konkave Innenflächen, die das Füllrohrende übergreifen können.

Die erfindungsgemäße Vorrichtung hat den Vorteil, daß durch Übergreifen des rohrförmigen Endes des Trägerelementes über das Füllrohrende und durch die Ausklinkungen des rohrförmigen Endes des Trägerelementes der Schlauch durch die Klemmorgane auf dem Füllrohrende gleichzeitig durch die stehenden Vorschubrollen auf dem Ende des Trägerelementes gehalten wird. Dadurch, daß die Klemmstellen etwa in einer Ebene liegen, wird beim Zurückfahren der Vorschubeinrichtung vom Füllrohr weg schon nach einem geringen Hub erreicht, daß der Schlauch im Bereich der Freistelle straff gespannt ist. Dadurch kann die Verschließstelle zu einem Zopf mittig zur Füllrohrachse zusammengefaßt werden, so daß der Clip auf Füllrohrmitte den Darmabschnitt verschließt, der anschliessend vom Schlauch getrennt wird. Dies ist erforderlich, damit der verschlossene Zopf beim Füllen dieses vorverschlossenen Schlauchendes zentrisch durch die Darmbremse geführt werden kann. Außerdem sind zum Transport des Schlauches und anschließendem Verschließen nur kurze Hübe der bewegten Massen erforderlich.

Nach Beendigung des Verschließvorganges ist es erforderlich, daß das nicht verschlossene Ende der Schlauchrolle so angeordnet ist, daß es ohne Schwierigkeiten für den nächsten Arbeitsgang über das Füllrohrende geschoben werden kann. Dies wird dadurch erreicht, daß das rohrförmige Ende des Trägerelementes aus dem Darmende herausragt, was wiederum durch einen weiteren Rückhub der Vorschubeinheit mit einem Anschlag für das Trägerelement bewirkt wird.

Da die Reibung an der Innenseite des Schlauches zum Trägerelement geringer sein muß als an der Außenseite zur Anlage an den Vorschubrollen, muß für das Trägerelement und für die Oberfläche der Vorschubrollen eine entsprechende Materialauswahl getroffen werden. So kann das Trägerelement Auflagen aus Polytretrafluoräthylen (Teflon ®) tragen, und die Vorschubrollen können Auflagen aus Gummi, Leder oder Kork tragen.

In einer weiteren Ausbildung der Erfindung kann vorgesehen werden, daß das Trägerelement keinen kreisförmigen Querschnitt hat und statt dessen mindestens im Bereich der Vorschubrollen Flächen nicht kreisförmigen Querschnitts zur Anlage der Vorschubrollen aufweist. Dies kann vorzugsweise in der Weise geschehen, daß das Trägerelement insgesamt einen rechteckigen Querschnitt aufweist. Durch diese Ausbildung des Trägerelementes kann erreicht werden, daß mit einer einzigen Größe des Trägerelementes ein größerer Kaliberbereich des Schlauches verarbeitet werden kann als bei einem Trägerelement mit rundem Querschnitt und entsprechend angepaßten Vorschubrollen. Bei einem runden Trägerelement ist bei relativ kleiner Kaliberänderung bereits ein Austausch des Trägerelementes und der entsprechenden Vorschubrollen erforderlich.

Die erfindungsgemäße Vorrichtung eignet sich zur Verarbeitung von solchen Schlauchlängen, die lediglich einen Abschnitt für eine einzelne Wurst bilden, und bei denen nach dem Füllvorgang der Endverschluß gebildet wird. Die erfindungsgemäße Vorrichtung kann aber auch für Schlauchlängen verwendet werden, aus denen Portionswürste im Strang oder davon vereinzelt Einzelwürste hergestellt werden.

Weitere Einzelheiten der Erfindung ergeben sich aus der folgenden Beschreibung und den Zeichnungen :

Es zeigen :

Figur 1 eine Seitenansicht der Schlauchvorschubeinheit mit dem erfindungsgemäßen Trägerelement ;

Figur 2 in perspektivischer Darstellung das auf das Füllrohrende axial verschobene rohrförmige Ende des Trägerelementes mit Ausklinkungen und Klemmorgan, wobei das Klemmorgan und die Vorschubrollen etwa in einer Ebene liegen ;

Figur 3 eine Draufsicht auf die Verschluß- und Trennstelle des Schlauchabschnitts mit zurückgefahrenem Trägerelement und auf das beschickte Füllrohr mit angeschwenkten Klemmorganen ;

Figur 4 eine Draufsicht auf die Vorrichtung bei ganz zurückgefahrener Vorschubeinheit, wobei das Trägerelement gegen eine Anschlagrolle gefahren ist und aus dem geöffneten Darm austritt ;

Figur 5 in perspektivischer Darstellung das Trägerelement mit rohrförmig ausgebildetem Ende und Ausklinkungen für anschwenkbare Klemmorgane ;

Figur 6a-c verschieden ausgebildete Querschnitte des Trägerelementes ;

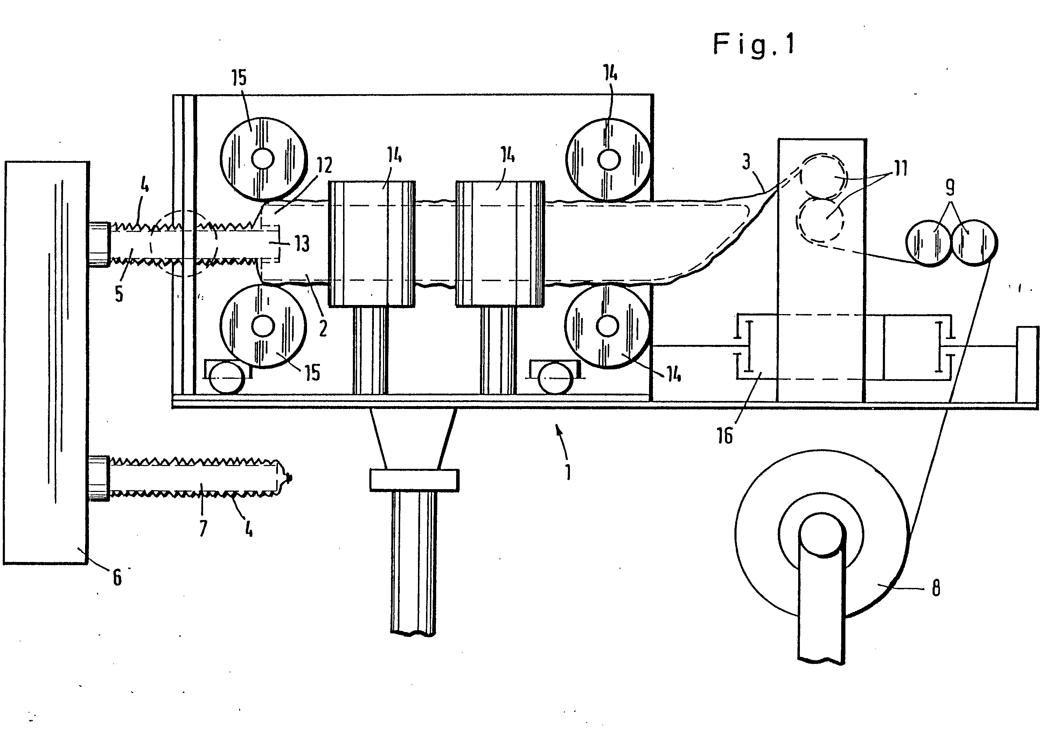

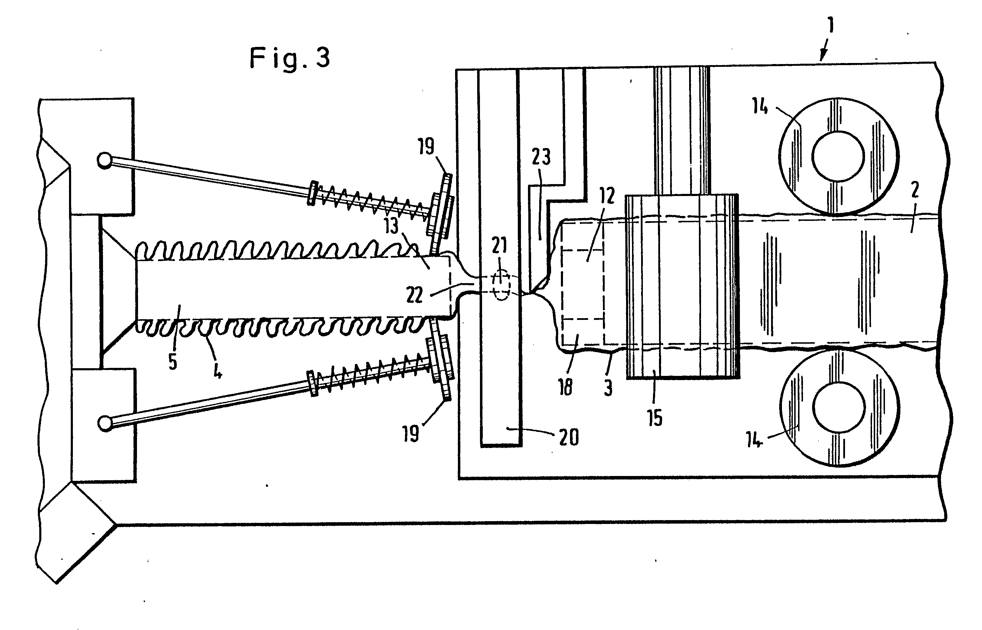

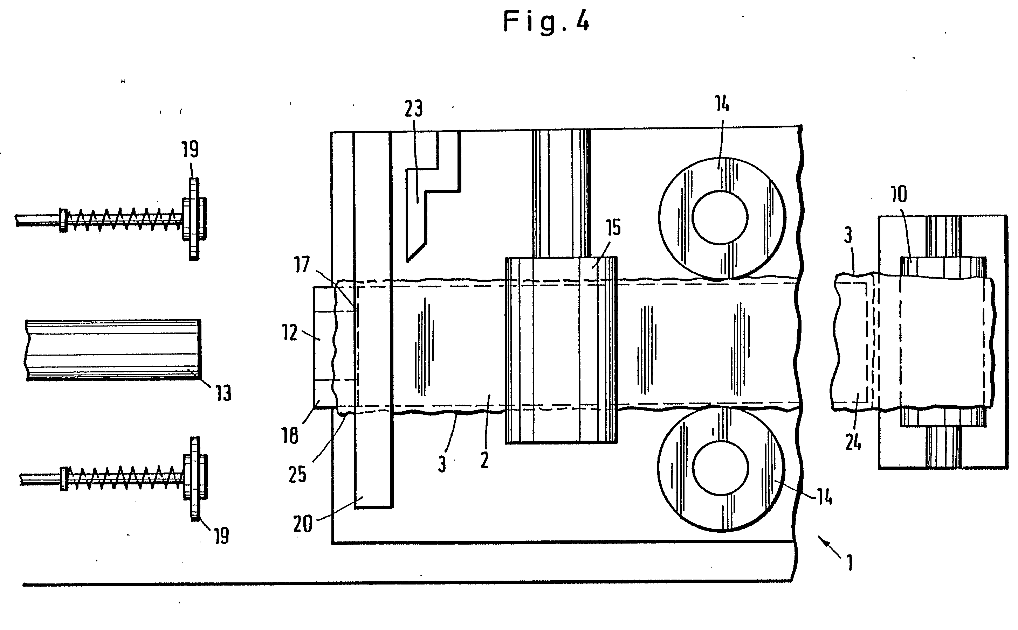

Fig. 1 zeigt eine Seitenansicht der Schlauchvorschubeinheit 1 mit dem erfindungsgemäßen Trägerelement 2, über welches ein Schlauch 3 zur Bildung eines Schlauchabschnittes 4 auf ein Füllrohr 5 aufgeschoben wird. Das Füllrohr 5 ist an einem revolverartigen Mehrfachtüllenkopf 6 einer nicht gezeigten Füllmaschine angeordnet, wobei an dem Mehrfachtüllenkopf 6 mindestens ein weiteres gleich langes Füllrohr 7 mit bereits verschlossenem Schlauchabschnitt 4 angeordnet sein kann. Der Schlauch 3 wird in bekannter Weise von einer Schlauchvorratsrolle 8 durch Abzugswalzen 9 und Meßwalzen 11 abgezogen und über das Trägerelement 2 gezogen, dessen rohrförmig ausgebildetes Ende 12 über das Füllrohrende 13 greift, damit der Schlauchabschnitt 4 störungsfrei auf dem Füllrohr 5 gebildet werden kann. Die Vorschubrollen 14 und 15 schieben die für die gewünschte Abschnittslänge erforderliche Schlauchlänge auf das Füllrohr 5. Die Schlauchvorschubeinheit 1 wird beispielsweise durch einen Mehrstellungs-Pneumatikzylinder 16 axial von der in Fig. 1 gezeigten Stellung, in die Verschließstellung gem. Fig. 3 und die erneute Schlauchöffnungsstellung Fig. 4 verfahren.

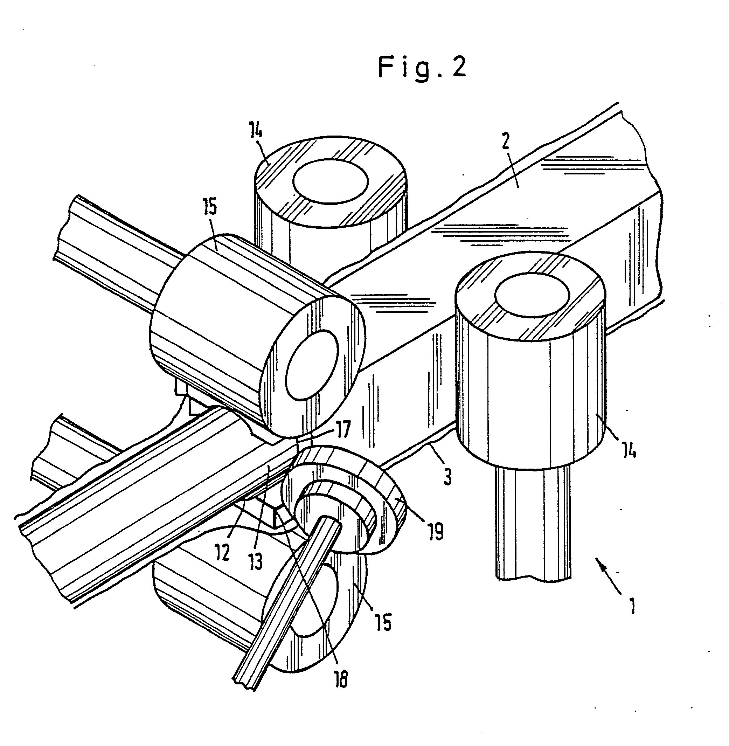

Die Fig. 2 zeigt in perspektivischer Darstellung das Trägerelement 2, wie in Fig. 1, in seiner Schlauchaufbringstellung. Das Trägerelement 2 ist mit seinem rohrförmigen Ende 12 über das Füllrohrende 13 bis zu dem als Anschlag wirkenden Grund 17 der Ausklinkung 18 des Trägerelementes 2 axial in Füllrichtung verschoben.

Durch die Ausklinkung 18 im Trägerelement 2 greift ein Klemmorgan 19 und drückt den Schlauch 3 auf das Füllrohrende 13 fest. Außerdem drücken die als Klemmorgan dienenden Vorschubrollen 15 den Schlauch 3 auf das rohrförmige Ende 12 des Trägerelementes 2 an. Ferner ist ersichtlich, daß die auf dem rohrförmigen Ende 12 des Trägerelementes 2 stehenden Vorschubrollen 15 und das Klemmorgan 19, welches den Schlauch 3 auf dem Füllrohrende 13 festhält, etwa in einer Ebene liegen. Dadurch wird erreicht, daß — wie in Fig. 3 gezeigt ist — beim axialen Rückhub der Schlauchvorschubeinheit 1 mit feststehenden Vorschubrollen 15 und dem Trägerelement 2 der auf dem Füllrohrende 13 durch die Klemmorgane 19 festgehaltene Schlauchabschnitt 4 schon nach einem geringen Rückhub an dieser Stelle straff gespannt wird. Hierdurch wird erreicht, daß die zu verschließenden Schlauchabschnitte 4 die gewünschte genaue Abschnittslänge erhalten und die Verschließeinrichtung 20 den Verschluß 21 mittig zur Füllrohrachse anbringen kann.

Fig. 3 zeigt eine Draufsicht auf den gebildeten Zopf 22 des Schlauches 3 mit zurückgefahrenem Trägerelement 2, auf das Füllrohr 5 mit dem Füllrohrende 13 mit zwei angeschwenkten Klemmorganen 19, die den gebildeten Schlauchabschnitt 4 am Füllrohrende 13 festhalten. Eine Verschließeinrichtung 20 setzt einen Verschluß 21, so daß die Verschließstelle des Schlauches 3 zu einem Zopf 22 mittig zur Füllrohrachse zusammengefaßt wird. Der Schlauchabschnitt 4 wird von einer Trenneinrichtung 23 vom Schlauch 3 abgetrennt. Wird der Schlauchabschnitt 4 nur von einem einseitig wirkenden Klemmorgan 19 (Fig. 2) gehalten, dann muß die Verschließeinrichtung 20 so eingestellt werden, daß der Schlauchabschnitt 4 trotzdem mittig verschlossen wird.

Fig. 4 zeigt eine Draufsicht auf die Vorrichtung bei ganz zurückgefahrener Vorschubeinheit 1, wobei das Trägerelement 2 mit seinem konischen Ende 24 (vgl. Fig. 1) gegen den Anschlag 10 gefahren ist und mit seinem rohrförmigen Ende 12 das abgeschnittene Schlauchende 25 dabei geöffnet hat. Die Klemmorgane 19 befinden sich in abgeschwenktem Zustand vom Füllrohrende 13. Fährt beim nächsten Arbeitstakt das Trägerelement 2 wieder axial mit seiner Anschlagfläche 17 gegen das Füllrohrende 13, dann kann der nächste Schlauchabschnitt 4, ohne am Füllrohrende 13 anzustoßen, durch die Vorschubrollen 14 und 15 auf das Füllrohr 5 gefördert werden.

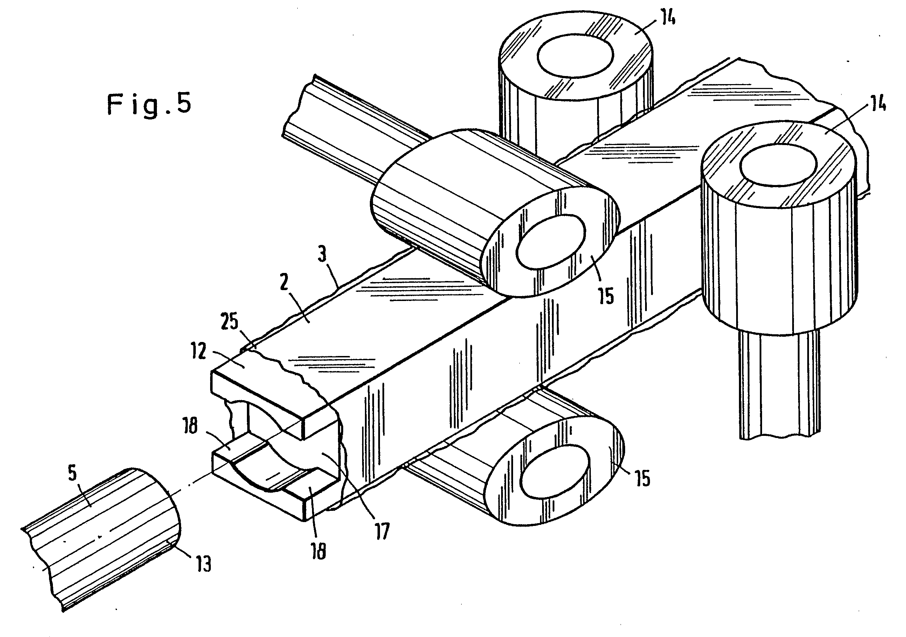

Fig. 5 zeigt in perspektivischer Darstellung das Trägerelement 2 beispielsweise mit rechteckigem Querschnitt und das rohrförmige Ende 12 des Trägerelementes 2 mit den Ausklinkungen 18, durch die Klemmorgane 19 (Fig. 2 und Fig. 3) eingreifen und den Schlauch 3 auf dem Füllrohrende 13 festhalten können. In dem rohrförmigen Ende 12 des Trägerelementes 2 befindet sich ein als Anschlag wirkender Grund 17 der Ausklinkung 18, an dem beim axialen Zusammenfahren des Trägerelementes 2 die Stirnfläche des Füllrohrendes 13 zur Anlage kommt.

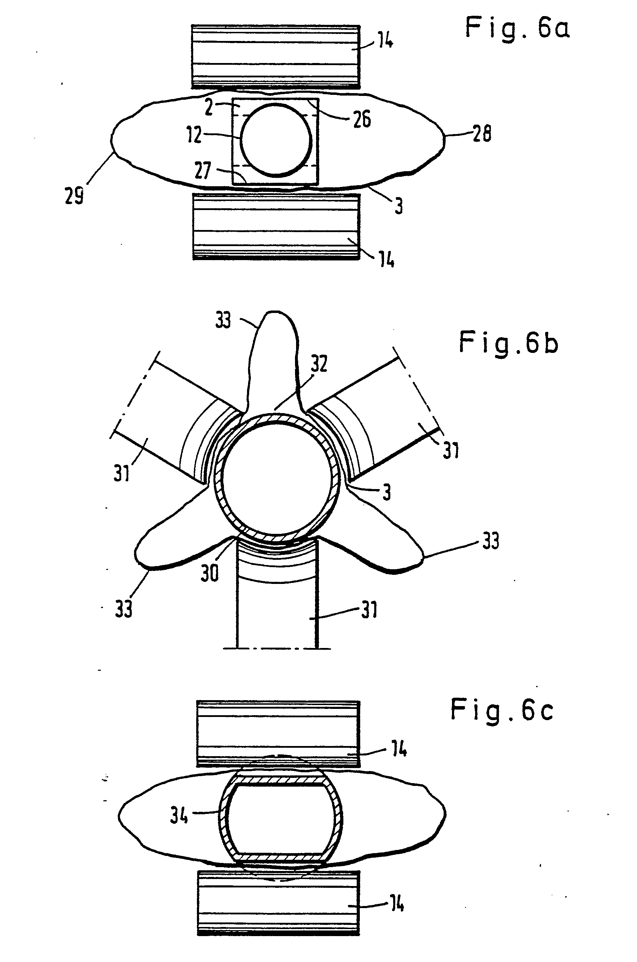

Fig. 6a zeigt einen bevorzugten rechteckigen Querschnitt des Trägerelementes 2. Hierbei kann der Vorschub des Schlauches 3 bei einem großen Kaliberbereich mit einem einzigen Trägerelement 2 erreicht werden. Die Vorschubwalzen 14 greifen nur an zwei gegenüberliegenden Flächen 26 und 27 an. Bei einem erheblich größerem Schlauchkaliber als der dem Trägerelement 2 entspricht, kann der Schlauch 3 bei 28 und 29 ausweichen, ohne daß Störungen beim Aufbringen auf dem Füllrohr 5 auftreten.

Fig. 6b zeigt ein bekanntes Trägerelement 30 mit rohrförmigen Querschnitt. Hierbei sind üblicherweise die Vorschubrollen 31 dem Rohrumfang 32 angepaßt, damit eine gute Mitnahme des Schlauches 3 erfolgt. Tritt hierbei das zu große Schlauchkaliber zwischen den Vorschubrollen 31 bei 33 aus, dann kann das Aufbringen des Schlauches 3 auf das Füllrohr 5 gestört werden. Das Trägerelement 30 soll bei dieser Ausführung ungefähr dem Schlauchkaliber entsprechen, damit die Vorschubrollen 31 störungsfrei arbeiten können.

Fig. 6c zeigt eine weitere mögliche Ausführungsform des Querschnitts eines Trägerelementes 34, bei dem die gleichen Vorteile bestehen wie beim Trägerelement 2 gem. Fig. 6a.

## Patentansprüche

1. Vorrichtung zum Aufbringen einer Schlauchlänge auf das Füllrohr (5) eines Mehrfachtüllenkopfes (6) zur Herstellung eines an einem Ende verschlossenen Darmabschnittes (4) zu dessen weiterer Verarbeitung auf kombinierten Füll- und Verschließmaschinen, bestehend aus einem Trägerelement (2) mit rohrförmig ausgebildetem Ende (12), das von Vorschubrollen (14, 15) einer Schlauchvorschubeinheit (1) für den Transport des von einer Schlauchrolle (8) abgezogenen Schlauches gehalten ist und das zum Aufbringen der Schlauchlänge axial mit dem Füllrohrende (13) zusammenführbar ist, wobei es dieses Füllrohrende (13) im zusammengeführten Zustand zumindest teilweise übergreifend aufnimmt, und aus Klemmorganen, zum Festhalten der Schlauchlänge auf dem Trägerelement bzw. auf dem Füllrohr, dadurch gekennzeichnet, daß das rohrförmige Ende (12) des Trägerelements (2) eine oder mehrere Ausklinkungen (18) aufweist, durch die hindurch der Schlauch mittels eines oder mehrerer anschwenkbarer Klemmorgane (19) auf dem mit dem Trägerelement (2) axial zusammengeführten Füllrohrende (13) festlegbar ist, daß in diesem angeschwenkten Zustand der Klemmorgane (19) im Bereich des rohrförmigen Endes (12) des Trägerlementes (2) angeordnete Vorschubrollen (15) festgestellt sind, um so als Klemmorgane den Schlauch (3) auf dem rohrförmigen Ende (12) des Trägerelementes (2) zu halten, wobei die Mittelachsen dieser Vorschubrollen ungefähr in einer Ebene mit den Klemmstellen der Klemmorgane (19) auf dem Füllrohrende (13) angeordnet sind.

2. Vorrichtung nach Anspruch 1, dadurch gekennzeichnet, daß beim axialen Rückhub der Schlauchvorschubeinheit (1) zusammen mit dem Trägerelement (2) dieses vor Beendigung des Rückhubs der Schlauchvorschubeinheit (1) auf einem Anschlag (10) gehalten wird, wodurch sein rohrförmiges Ende (12) aus dem Schlauchende (25) heraustritt.

3. Vorrichtung nach Anspruch 1 oder 2, dadurch gekennzeichnet, daß das Trägerelement (2) mindestens im Bereich der Vorschubrollen (14, 15) Flächen nicht kreisförmigen Querschnitts zur Anlage dieser Vorschubrollen (14, 15) aufweist.

## Claims

1. Apparatus for applying a tubing length to the filling tube (5) of a multiple-spout head (6) for making a casing section (6) which is closed at one end and is to be processed further on combined filling and closing machines, consisting of a carrier element (2) having a tubular end (12), which is held by feed rollers (14, 15) of a tubing- feeding unit (1) for transporting the tubing, which is withdrawn from a roll (8) of tubing, said carrier element and the end (13) of the filling tube being adapted to be axially moved close to each other in order to apply the tubing length and in said operation at least temporarily overlappingly receives the end (13) of the filling tube when it has been moved close to with it, and clamping elements for retaining the tubing length on the carrier element and on the filling tube, characterized in that the tubular end (12) of the carrying element (2) comprises one or more notches (18), one or more pivoted clamping elements (19) extend through the notch or notches to retain the tubing section on the end (13) of the filling tube when said end (13) and the carrier element (2) have been axially moved close to each other, that when said clamping elements (19) have been swung into engagement said clamping elements lock feed rollers (15), which are disposed adjacent to the tubular end (12) of the carrier element (2) to serve as clamping elements for retaining the tubing (3) on the tubular end (12) of the carrier element (2), and the centre lines of said feed rollers lie approximately in one plane with the nips formed by the clamping elements (19) with the end (13) of the filling tube.

2. Apparatus according to claim 1, characterized in that during the axial return stroke of the tubing feeding unit (1) together with the carrier element (2) the latter is held at a stop (10) before the tubing feeding unit (1) has terminated its return stroke, so that the tubular end (12) of the carrying element (2) then protrudes out of the end (25) of the tubing.

3. Apparatus according to claim 1 or 2, characterized in that at least adjacent to the feed rollers (14, 15), the carrier element (2) has surfaces which are non-circular in cross-section and engageable with said feed rollers (14, 15).

**Revendications**

1. Dispositif pour engager une longueur de tuyau sur le tube de remplissage (5) d'une tête à tubulures multiples (6) pour fabriquer un élément de boyau (4) fermé à l'une de ses extrémités, en vue de son traitement ultérieur dans des machines combinées de remplissage et de fermeture, ce dispositif étant constitué par un organe de support (2) comportant une extrémité de forme tubulaire (12), qui est maintenue par des rouleaux d'avance (14, 15) d'une unité (1) d'avance du tuyau servant au transport du tuyau dévidé d'un rouleau (8) de dévidage du tuyau et qui peut être rapprochée axialement de l'extrémité (13) du tube de remplissage pour la mise en place de la longueur de tuyau et qui loge, en l'entourant au moins partiellement, cette extrémité (13) du tube de remplissage, dans son état rapproché de ce dernier, et par des organes de serrage servant à maintenir la longueur de tuyau sur l'organe de support ou sur le tube de remplissage, caractérisé par le fait que l'extrémité tubulaire (12) de l'organe de support (2) comporte une ou plusieurs découpes (18) à travers lesquelles le tuyau peut être bloqué à l'aide d'un ou de plusieurs organes de serrage (9) pouvant être appliqués par pivotement sur l'extrémité (13) du tube de remplissage, rapprochée axialement de l'organe de support (2), lorsque les organes de serrage (19) sont dans cet état appliqué par pivotement, les rouleaux d'avance (15) disposés au voisinage de l'extrémité tubulaire (12) de l'organe de support (2) sont bloqués afin de maintenir ainsi, à la manière d'organes de serrage, le tuyau (3) sur l'extrémité tubulaire (12) de l'organe de support (2), les axes médians de ces rouleaux d'avance étant disposés approximativement dans un plan passant par les points de serrage des organes de serrage (19) sur l'extrémité (13) du tube de remplissage.

2. Dispositif suivant la revendication 1, caractérisé par le fait que lors de la course axiale de retour de l'unité (1) d'avance du tuyau ainsi que de l'organe de support (2), ce dernier est retenu contre une butée (10) avant la fin de la course de retour de ladite unité (1), ce qui a pour effet que son extrémité tubulaire (12) sort hors de l'extrémité (25) du tuyau.

3. Dispositif suivant la revendication 1 ou 2, caractérisé par le fait que l'organe de support (2) comporte, au moins dans la zone des rouleaux d'avance (14, 15), des surfaces possédant une section transversale non circulaire et servant à l'application de ces rouleaux d'avance (14, 15).

Fig.1

0 111 960

# Fig. 2

Fig. 3

Fig.4

Fig.5

0 111 960

Fig. 6a

Fig.6b

Fig.6c

6